# EUROPÄISCHE PATENTANMELDUNG

(11) **EP 1 777 374 A2**
(43) Veröffentlichungstag der Anmeldung: **25.04.2007**
(21) Anmeldenummer: 06020673.7
(22) Anmeldetag: 30.09.2006
(51) Int. Cl.: F01D 13/00

(54) **Elektrischer Energieerzeuger**

(30) Priorität: 19.10.2005 DE 102005049962
(71) Anmelder: Rheinmetall Landsysteme GmbH, 24107 Kiel (DE)
(72) Erfinder: Kühl, Manfred, 24229 Schwedeneck (DE); Lenz, Olaf, 24113 Schulensee (DE)
(74) Vertreter: Dietrich, Barbara

(57) **Zusammenfassung**

Um einen Energieerzeuger (1) herzustellen, der auf kleinstem Bauraum ein hohes Leistungspotential aufweist, schlägt die Erfindung vor, einen elektrischen Generator (20) über ein gemeinsames Getriebe (19) mit den Abtriebswellen (17, 18) mindestens zweier Kleingasturbinen (8, 9) zu verbinden, wobei die beiden Kleingasturbinen (8, 9) mit einer elektronischen Steuereinrichtung (25) verbunden sind, derart, dass je nach Bedarf an elektrischer Energie nur eine der beiden Kleingasturbinen (8, 9) oder beide Kleingasturbinen (8, 9) zusammen Leistung über das Getriebe (19) an den elektrischen Generator (20) abgeben.

## Beschreibung

Die Erfindung betrifft einen elektrischen Energieerzeuger mit einem eine Antriebswelle aufweisenden elektrischen Generator.

Der gestiegene Energiebedarf bei Fahrzeugen, insbesondere militärischen Kettenfahrzeugen, macht eine autarke Energieversorgung dieser Fahrzeuge erforderlich. Neben dem Energiebedarf für elektrische Verbraucher, wie der Funkanlage, dem IR-Entfernungsmesser, dem GPS und der Waffenrichtanlage, ist auch der Energiebedarf für den Betrieb z.B. einer Kühlanlage des Besatzungs- oder Kampfraumes dieser Fahrzeuge zu berücksichtigen. Dabei beträgt der Energiebedarf eines modernen Kampfpanzers etwa 17 bis 20 kW elektrischer Leistung.

Als Energieerzeuger werden üblicherweise Kleindieselmotoren verwendet, die allerdings unter anderem den Nachteil aufweisen, dass sie ein relativ hohes Gewicht besitzen und ihr Betrieb mit einer hohen Schadstoffemission verbunden ist.

Es ist bereits vorgeschlagen worden, den jeweiligen elektrischen Generator mit einer Kleingasturbine anzutreiben. Dabei bestimmt sich die Auslegung der Kleingasturbine nach der maximal zu erbringenden Leistung. Nachteilig bei diesen bekannten Energieerzeugern ist vor allem, dass sie bei kleiner Leistung einen niedrigen Wirkungsgrad (d.h. einen überproportional hohen Kraftstoffverbrauch) besitzen.

Der Erfindung liegt die Aufgabe zugrunde, einen Energieerzeuger anzugeben der die Nachteile bekannter Energieerzeuger nicht aufweist und auf kleinstem Bauraum ein hohes Leistungspotential besitzt.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, den elektrischen Generator über ein gemeinsames Getriebe mit den Abtriebswellen mindestens zweier Kleingasturbinen zu verbinden, wobei die beiden Kleingasturbinen mit einer elektronischen Steuereinrichtung verbunden sind, derart, dass je nach Bedarf an elektrischer Energie nur eine Kleingasturbine oder beide Kleingasturbinen Leistung über das Getriebe an den Generator abgeben.

Mit einer derartigen Anlage ist es auf einfache Weise möglich, auf kleinstem Bauraum mit beiden Kleingasturbinen beispielsweise 20 kW elektrischer Leistung zu erzeugen. Bei geringerer elektrischer Leistungsabnahme wird eine der beiden Kleingasturbinen mittels der Steuereinrichtung abgeschaltet, so dass dann ohne wesentliche Verminderung des Wirkungsgrades beispielsweise nur noch 10 kW der elektrischen Leistung zur Verfügung stehen.

Vorzugsweise handelt es sich bei dem Getriebe um ein Untersetzungsgetriebe, welches die hohen Turbinendrehzahlen der beiden Kleingasturbinen auf eine geringere Drehzahl zum Antrieb des Generators herabsetzt.

Das Getriebe ist in vorteilhafter Weise als Verteilergetriebe ausgebildet, wobei es unter anderem mit der Antriebswelle einer Kraftstoffpumpe zur Förderung des für die Kleingasturbinen benötigten Kraftstoffes verbunden ist.

Bei einer Ausführungsform der Erfindung sind die Abtriebswellen der beiden Kleingasturbinen über mechanisch überbrückbare Freiläufe mit dem Getriebe verbunden, so dass bei einem Abschalten der einen Kleingasturbine die Abtriebswelle dieser Turbine frei mitläuft. Zum Anlassen einer der Kleingasturbinen oder beider Kleingasturbinen mittels eines ebenfalls auf das Getriebe wirkenden Anlassers werden die Freiläufe dann mechanisch überbrückt.

Um einen in unterschiedlichen Fahrzeugen einsetzbaren Energieerzeuger zu schaffen, hat es sich als vorteilhaft erwiesen, den Energieerzeuger als modulare Einheit in einem mindestens zwei Kammern aufweisenden transportablen Container anzuordnen. Dabei sind in der ersten Kammer des Containers mindestens die jeweilige Brennkammer und die jeweilige Turbine der beiden Kleingasturbinen angeordnet, wobei in der Container-Außenwand dieser Kammer Öffnungen vorgesehen sind, durch welche die Abgase der Kleingasturbinen in den Außenbereich gelangen.

In der zweiten Kammer sind das mit den Abtriebswellen der Kleingasturbinen verbundene Getriebe, der elektrische Generator sowie die Kraftstoffpumpe und der Anlasser angeordnet, wobei in der Container-Außenwandung der zweiten Kammer Lufteintrittsöffnungen vorgesehen sind, so dass die dem jeweiligen Verdichter der entsprechenden Kleingasturbine zuzuführende Luft durch diese Kammer hindurchströmt.

Um eine möglichst autark arbeitende modulare Einheit zu erhalten, kann es zweckmäßig sein, den Kraftstoffbehälter für den Kraftstoff, der für den Betrieb der Kleingasturbinen erforderlich ist, ebenfalls in der zweiten Kammer fest oder auswechselbar anzuordnen.

Die beiden Kleingasturbinen weisen in vorteilhafter Weise mit Rückschlagklappen versehene Abgasstutzen auf.

Die Frischluftversorgung der Kleingasturbinen erfolgt vorzugsweise über zwei Zyklonfilter, die in den Lufteintrittsöffnungen der Container-Außenwandung angeordnet und deren Ansaugöffnungen bei Stillstand der Turbinen individuell durch Klappen verschließbar sind.

Weitere Einzelheiten und Vorteile der Erfindung sind in den Unteransprüchen enthalten.

Die Erfindung soll anhand eines Ausführungsbeispiels mit Zeichnung näher erläutert werden.

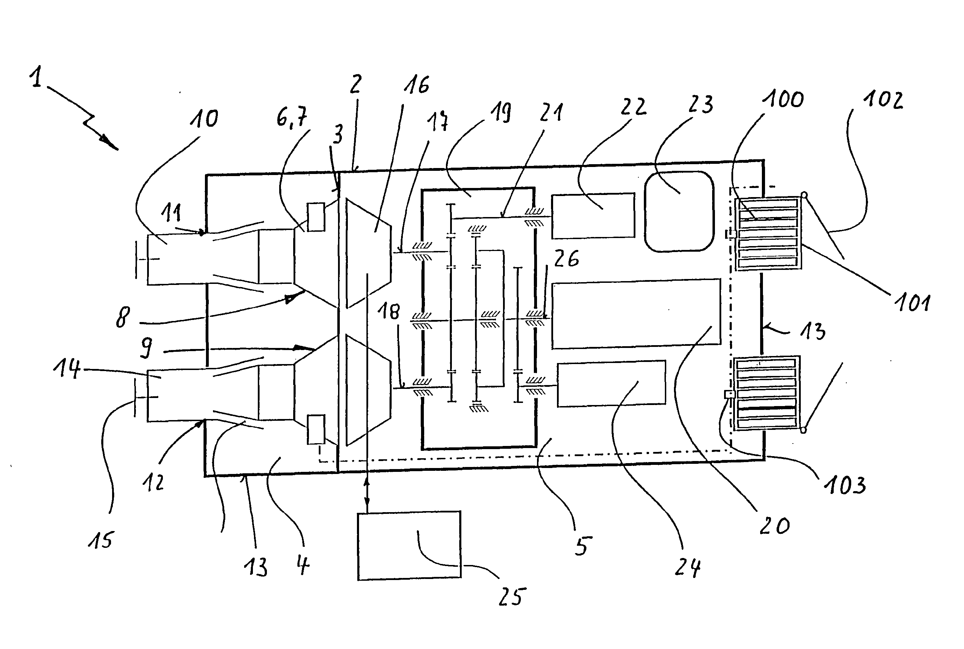

In der einzigen Figur ist mit 1 ein nur schematisch dargestellter erfindungsgemäßer Energieerzeuger bezeichnet, der einen transportablen Container 2 umfasst. Der Container 2 enthält zwei durch eine vorzugsweise gasdichte Zwischenwand 3 getrennte Kammern 4, 5, wobei es sich bei der ersten Kammer 4 um einen Heißraum und bei der zweiten Kammer 5 um einen Kaltraum handelt.

In der ersten Kammer 4 des Containers 2 befinden sich anschließend an die Zwischenwand 3 die Brennkammern 6 und die Turbinen 7 zweier an sich bekannter Kleingasturbinen 8 und 9. Der Gasturbinen "Powerhead" ist dabei so in die Schottwand 3 integriert, dass sich die heißen Teile im Raum 4 befinden (Brennkammer, Turbinenrad) und die kalten im Raum 5 (Verdichteransaugöffnung). Die Abgase der beiden Kleingasturbinen 8, 9 werden durch getrennte Abgasschalldämpfer 10 mit eigenen Tauchklappen über entsprechende Öffnungen 11, 12 in der Container-Außenwand 13 dieser Kammer 4 nach außen abgeleitet. Vorgesehen ist, dass die Brennluft zunächst die Wärmeabgebenden Komponenten im Raum 5 kühlt und dann in die Turbine eintritt.

Die entsprechenden Abgasstutzen 14 der Abgasschalldämpfer 10 besitzen jeweils eine integrierte Rückschlagklappe 15, die das Rückströmen der Abgase bei nicht betriebenen Turbinen verhindert.

In der zweiten Kammer 5 des Containers 2 schließen sich an die Zwischenwand 3 die Verdichter 16 der Kleingasturbinen 8, 9 an, welche die in die zweite Kammer 5 von außen angesaugte Luft verdichten, bevor sie den Brennkammern 6 der Kleingasturbinen 8, 9 zugeführt wird. Die Luft gelangt dabei über zwei in der Container-Außenwand 13 befindliche Zyklonfilter 100 in die zweite Kammer 5, die je nach Einsatz der Kleingasturbinen 8, 9 alleine oder zusammen von der angesaugten Luft durchströmt werden. Beide Ansaugöffnungen 101 der Zyklonfilter 100 können bei Stillstand der Kleingasturbinen 8, 9 individuell durch Klappen 102 verschlossen werden.

Die Grobstaubabsaugung der beiden Zyklonfilter 100 erfolgt über mit "Bleedluft" betriebene Ejektoren 103 in bekannter Art und Weise.

In der zweiten Kammer 5 befindet sich außerdem ein mit den Abtriebswellen 17, 18 der Kleingasturbinen 8, 9 verbundenes Untersetzungsgetriebe 19, welches die hohen Turbinendrehzahlen der beiden Kleingasturbinen 8, 9 verringert, und ein mit dem Getriebe 19 über eine Antriebswelle 26 verbundener elektrischer Generator 20 zur Erzeugung der benötigten elektrischen Energie.

Das Untersetzungsgetriebe 19 ist als Verteilergetriebe ausgebildet und mit der Antriebswelle 21 einer Kraftstoffpumpe 22 zur Förderung des für die Kleingasturbinen 8, 9 benötigten Kraftstoffes verbunden, wobei der entsprechende Kraftstoffbehälter 23 ebenfalls in der zweiten Kammer 5 des Containers 2 angeordnet ist.

Ferner wirkt auch ein Anlasser 24 über das Getriebe 19 auf die Abtriebswellen 17, 18 der beiden Kleingasturbinen 8, 9, so dass das Starten eines oder beider Kleingasturbinen 8, 9 gesichert ist. Dabei sind die beiden Kleingasturbinen 8, 9 über mechanisch überbrückbare Freiläufe mit dem Getriebe 19 verbunden.

Die Steuerung der beiden Kleingasturbinen 8, 9 übernimmt eine elektronische Steuereinrichtung (Zentralelektronik) 25, welche beispielsweise die Kleingasturbine 8 als führend
und die Kleingasturbine 9 als unterstützend definiert. Dabei ist die Priorisierung der jeweiligen Kleingasturbine 8, 9 vor dem Betrieb des Energieerzeugers 1 wählbar.

Die Erfindung ist selbstverständlich nicht auf das vorstehend beschriebene Ausführungsbeispiel beschränkt. So kann der erfindungsgemäße Energieerzeuger beispielsweise auch drei Kleingasturbinen umfassen, deren Abtriebswellen auf ein entsprechendes, mit dem elektrischen Generator verbundenes Untersetzungsgetriebe wirken. Die Steuereinrichtung muss in einem derartigen Fall derart aufgebaut sein, dass sie bei Erreichen vorgegebener Leistungsgrenzen einzelne Kleingasturbinen ab- oder zuschaltet.

Die Erfindung ist ferner nicht auf die Verwendung bei Fahrzeugen beschränkt, sondern eignet sich gleichermaßen auch in Flugzeugen zur autarken Energieversorgung.

### Bezugszeichenliste

- 1: Energieerzeuger
- 2: Container
- 3: Zwischenwand
- 4: (erste) Kammer
- 5: (zweite) Kammer
- 6: Brennkammer
- 7: Turbine
- 8, 9: Kleingasturbinen
- 10: Abgasschalldämpfer
- 11,12: Öffnungen
- 13: Container-Außenwand
- 14: Abgasstutzen
- 15: Rückschlagklappe
- 16: Verdichter
- 17,18: Abtriebswellen
- 19: Getriebe, Untersetzungsgetriebe
- 20: Generator
- 21: Antriebswelle (Kraftstoffpumpe)
- 22: Kraftstoffpumpe
- 23: Kraftstoffbehälter
- 24: Anlasser
- 25: Steuereinrichtung
- 26: Antriebswelle (Generator)

- 100: Zyklonfilter
- 101: Ansaugöffnung
- 102: Klappe
- 103: Ejektor

## Patentansprüche

1. Elektrischer Energieerzeuger mit einem eine Antriebswelle (26) aufweisenden elektrischen Generator (20), **dadurch gekennzeichnet, dass** die Antriebswelle (26) des Generators (20) über ein gemeinsames Getriebe (19) mit den Abtriebswellen (17, 18) mindestens zweier Kleingasturbinen (8, 9) verbunden ist, wobei die beiden Kleingasturbinen (8, 9) mit einer elektronischen Steuereinrichtung (25) verbunden sind, derart, dass je nach Bedarf an elektrischer Energie nur eine der beiden Kleingasturbinen (8, 9) oder beide Kleingasturbinen (8, 9) zusammen Leistung über das Getriebe (19) an den Generator (20) abgeben.

2. Elektrischer Energieerzeuger nach Anspruch 1, **dadurch gekennzeichnet, dass** es sich bei dem Getriebe (19) um ein Untersetzungsgetriebe handelt, welches die hohen Turbinendrehzahlen der beiden Kleingasturbinen (8, 9) auf eine geringere Drehzahl zum Antrieb des Generators (20) herabsetzt.

3. Elektrischer Energieerzeuger nach Anspruch 1 oder 2, **dadurch gekennzeichnet, dass** das Getriebe (19) als Verteilergetriebe ausgebildet ist und mit einer Antriebswelle (21) einer Kraftstoffpumpe (22) zur Förderung des für die Kleingasturbinen (8, 9) benötigten Kraftstoffes verbunden ist.

4. Elektrischer Energieerzeuger nach einem der Ansprüche 1 bis 3, **dadurch gekennzeichnet, dass** die Abtriebswellen (17, 18) der beiden Kleingasturbinen (8, 9) über mechanisch überbrückbare Freiläufe mit dem Getriebe (19) verbunden sind.

5. Elektrischer Energieerzeuger nach einem der Ansprüche 1 bis 4, **dadurch gekennzeichnet, dass** das Getriebe (19) mit einem Anlasser (24) zum Starten der Kleingasturbinen (8, 9) verbunden ist.

6. Elektrischer Energieerzeuger nach einem der Ansprüche 1 bis 5, **dadurch gekennzeichnet,**
- **dass** der Energieerzeuger (1) als modulare Einheit in einem mindestens zwei Kammern (4, 5) aufweisenden transportablen Container (2) angeordnet ist,
- **dass** in der ersten Kammer (4) des Containers (2) mindestens die jeweilige Brennkammer (6) und die jeweilige Turbine (7) der beiden Kleingasturbinen (8, 9) angeordnet sind und in der Container-Außenwand (13) dieser Kammer (4) Öffnungen (11, 12) vorgesehen sind, durch welche die Abgase der Kleingasturbinen (8, 9) in den Außenbereich gelangen,
- **dass** in der zweiten Kammer (5) das mit den Abtriebswellen (17, 18) der Kleingasturbinen (8, 9) verbundene Getriebe (19), der elektrische Generator (20) sowie die Kraftstoffpumpe (22) und der Anlasser (24) angeordnet sind und
- **dass** in der Container-Außenwandung (13) der zweiten Kammer (5) Lufteintrittsöffnungen vorgesehen sind, durch welche die für die Kleingasturbinen (8, 9) benötigte Luft angesaugt wird.

7. Elektrischer Energieerzeuger nach Anspruch 6, **dadurch gekennzeichnet, dass** sich der für den Betrieb der Kleingasturbinen (8, 9) benötigte Kraftstoff in einem in der zweiten Kammer (5) angeordneten Kraftstoffbehälter (23) befindet.

8. Elektrischer Energieerzeuger nach Anspruch 6 oder 7, **dadurch gekennzeichnet, dass** die Kleingasturbinen (8, 9) mit Rückschlagklappen (15) versehene Abgasstutzen (14) aufweisen.

9. Elektrischer Energieerzeuger nach einem der Ansprüche 6 bis 8, **dadurch gekennzeichnet, dass** in den Lufteintrittsöffnungen der Container-Außenwand (13) Zyklonfilter (100) angeordnet sind.

10. Elektrischer Energieerzeuger nach Anspruch 9, **dadurch gekennzeichnet, dass** die Ansaugöffnungen (101) der Zyklonfilter (100) durch außenseitig angeordnete Klappen (102) verschließbar sind.
